# EUROPEAN PATENT SPECIFICATION

(11) **EP 4 489 106 B1**
(45) Date of publication and mention of the grant of the patent: **06.05.2026**
(21) Application number: 24175299.7
(22) Date of filing: 10.05.2024
(51) Int. Cl.: H01M 4/133, H01M 4/36, H01M 4/587

(54) **NEGATIVE ELECTRODE SHEET, BATTERY CELL, BATTERY PACK, AND ELECTRICITY-CONSUMPTION DEVICE**
NEGATIVELEKTRODENFOLIE, BATTERIEZELLE, BATTERIEPACK UND ELEKTRIZITÄTSVERBRAUCHSVORRICHTUNG
FEUILLE D'ÉLECTRODE NÉGATIVE, ÉLÉMENT DE BATTERIE, BLOC-BATTERIE ET DISPOSITIF DE CONSOMMATION D'ÉLECTRICITÉ

(30) Priority: 08.06.2023 CN 202310674022
(43) Date of publication of application: 08.01.2025
(73) Proprietor: Hithium Tech HK Limited, Hong Kong (HK)
(72) Inventor: YUAN, Jielin, Shenzhen, 518110 (CN); YU, Tong, Shenzhen, 518110 (CN)
(74) Representative: Santarelli

(56) References cited:
- EP-A1- 4 145 564
- US-A1- 2021 336 244

## Description

### TECHNICAL FIELD

This disclosure relates to the technical field of battery cells, and in particular, to a negative electrode sheet, a battery cell, a battery pack, and an electricity-consumption device.

### BACKGROUND

At present, energy crisis and environmental pollution are increasingly serious, and secondary battery cells, as a new type of energy conversion devices, are increasingly widely used. However, in the related art, an improvement of an energy density of a secondary battery cell usually results in a reduction in a dynamics performance of the secondary battery cell or a relatively short cycle life of the secondary battery cell.

EP 4 145 564 A1 discloses a secondary battery comprising an electrode assembly that has a body part and a tab extending from the body part. The body part comprises a negative electrode sheet comprising a negative electrode current collector and a negative electrode film layer disposed on at least one surface of the negative electrode current collector. The negative electrode film layer comprises a first region and second region disposed at two sides of the first region in a tab extension direction. The first region comprises a first negative electrode active material, and the first negative electrode active material comprises artificial graphite. The second region comprises a second negative electrode active material, and the second negative electrode active material comprises graphite. The DC impedance of the portion of the negative electrode sheet corresponding to the first region is marked as R1, and the DC impedance of the portion of the negative electrode sheet corresponding to the second region is marked as R2, and the second battery satisfies that: R1 < R2.

### SUMMARY

Aspects of the invention are set out in the appended claim.

The present disclosure provides a negative electrode sheet, a battery cell, a battery pack, and an electricity-consumption device are provided in the disclosure, where the battery cell may have a relatively high energy density and a relatively good cycling performance in the case where the negative electrode sheet is applied in the battery cell.

In the negative electrode sheet provided in the disclosure, the negative-electrode material layer includes the first active material, the first active material includes the first particle cluster and the second particle cluster, and the corresponding particle size value when the volume percentage in the first particle cluster reaches 50% is greater than the corresponding particle size value when the volume percentage in the second particle cluster reaches 50%, and thus at the same pressure, the compaction density of the first particle cluster is greater than the compaction density of the second particle cluster, i.e., a particle size is positively correlated with a compaction density. In the disclosure, the compaction density of the first particle cluster at the pressure of 5 tons is P1, the compaction density of the second particle cluster at the pressure of 5 tons is P2, and P1 and P2 satisfy: 1.0 ≤ P1/P2 ≤ 1.5. In the embodiments of the disclosure, the compaction density of the first particle cluster and the compaction density of the second particle cluster are both in a reasonable range, and thus a degree of graphitization of the first particle cluster and a degree of graphitization of the second particle cluster can be both in a reasonable range during manufacturing of the negative electrode sheet, so that in the case where the negative electrode sheet is applied in a battery cell, the battery cell may have a relatively high energy density and a relatively good cycling performance. In the case where P1/P2>1.5, on the one hand, it may be that the compaction density P1 of the first particle cluster is too high. In this case, particle sizes of particles in the first particle cluster are too large, so that a degree of graphitization of the particles in the first particle cluster is relatively high during manufacturing of the negative electrode sheet, which results in a reduction in lattice defects of the negative electrode sheet. Therefore, in the case where the negative electrode sheet is applied in the battery cell, when active ions move to be embedded into the negative electrode sheet or dis-embedded from the negative electrode sheet, the active ions need to move a relatively long distance to be embedded into the negative electrode sheet or dis-embedded from the negative electrode sheet, resulting in polarization of the battery cell during cycling of the battery cell. Polarization of the battery cell causes consumption of excessive active ions, and thus the cycling performance of the battery cell is reduced in the case where the negative electrode sheet is applied in the battery cell. On the other hand, in the case where P1/P2>1.5, it may be that the compaction density P2 of the second particle cluster is too low. In this case, particle sizes of particles in the second particle cluster are too small, so that during manufacturing of the negative electrode sheet, the degree of graphitization of the second particle cluster is relatively low due to too many grain boundaries of the second particle cluster, and thus in the case where the negative electrode sheet is applied in the battery cell, the first-time charge and discharge efficiency and the energy density of the battery cell are reduced. In the case where P1/P2<1.0, i.e., the compaction density P1 of the first particle cluster at the pressure of 5 tons is less than the compaction density P2 of the second particle cluster at the pressure of 5 tons, it may be proved that, during manufacturing of the negative electrode sheet, the first particle cluster may contain large particles formed by doping of many first binders, where particle sizes of original particles are relatively small. During graphitization of the first particle cluster, the first binders are transformed into soft carbon structures, so that the negative electrode sheet has many defects, and accordingly side reactions between the negative electrode sheet and the electrolyte are increased, which in turn causes a reduction in the first-time charge and discharge performance of the battery cell. Furthermore, the negative electrode sheet has many defects, and thus many active ions are consumed, which in turn causes a reduction in the cycling performance of the battery cell.

### BRIEF DESCRIPTION OF THE DRAWINGS

In order to describe technical solutions in embodiments of the disclosure more clearly, the following may give a brief introduction to accompanying drawings required for describing embodiments. Apparently, the accompanying drawings hereinafter described merely illustrate some embodiments of the disclosure. Based on these drawings, those of ordinary skill
in the art can also obtain other drawings without creative effort.
FIG. 1 is a schematic structural view of a negative electrode sheet in an embodiment of the disclosure.
FIG. 2 is a cross-sectional view of the negative electrode sheet in an embodiment of the disclosure, taken along A-A line in FIG. 1.
FIG. 3 is a schematic structural view of a battery cell in an embodiment of the disclosure.
FIG. 4 is a cross-sectional view of the battery cell in an embodiment of the disclosure, taken along B-B line in FIG. 3.
FIG. 5 is a schematic structural view of a positive electrode sheet in an embodiment of the disclosure.
FIG. 6 is a cross-sectional view of the positive electrode sheet in an embodiment of the disclosure, taken along C-C line in FIG. 5.
FIG. 7 is a schematic structural view of a battery pack in an embodiment of the disclosure.
FIG. 8 is a schematic structural view of an electricity-consumption device in an embodiment of the disclosure.
FIG. 9 is a circuit block diagram of an electricity-consumption device in an embodiment of the disclosure.

Illustration of reference signs in the accompanying drawings:
100 - negative electrode sheet, 110 - negative-electrode current collector, 120 - negative-electrode material layer, 200 - battery cell, 210 - electrolyte, 220 - positive electrode sheet, 221 - positive-electrode current collector, 222 - positive-electrode material layer, 230 - separator, 300 - battery pack, 310 - box, 400 - electricity-consumption device, 410 - device body.

### DETAILED DESCRIPTION

The following may illustrate clearly and completely technical solutions of embodiments of the disclosure with reference to accompanying drawings of embodiments of the disclosure. Apparently, embodiments illustrated herein are merely some, rather than all, of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or feature described in conjunction with the embodiment or implementation may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

At present, energy crisis and environmental pollution are increasingly serious, and secondary battery cells, as a new type of energy conversion devices, have found increasingly wide utilization. However, in the related art, an improvement of an energy density of a secondary battery cell usually results in a reduction in a dynamics performance of the secondary battery cell or a relatively short cycle life of the secondary battery cell.

In the related art, generally, the energy density of the secondary battery cell is increased by increasing a compaction density of a negative electrode sheet. However, as the compaction density of the negative electrode sheet increases, relatively serious polarization may occur on the secondary battery cell during cycling of the secondary battery cell, which in turn causes an increase in a temperature of the secondary battery cell and a reduction in a cycling performance of the secondary battery cell. In addition, the energy density of the secondary battery cell may be increased by increasing the amount of active materials in the negative electrode sheet. However, with the increase of the active materials, a thickness of the negative electrode sheet increases, which in turn causes an increase in a length of a path for active ions in the secondary battery cell to move to be embedded into the negative electrode sheet or dis-embedded from the negative electrode sheet, and accordingly causes a reduction in the cycling performance of the secondary battery cell.

In terms of the disclosure, "polarization" means a phenomenon in which active ions in a battery cell move directionally under the action of an external electric field, resulting in that a concentration of active ions in the vicinity of electrodes is greater than a concentration of active ions in electrolyte.

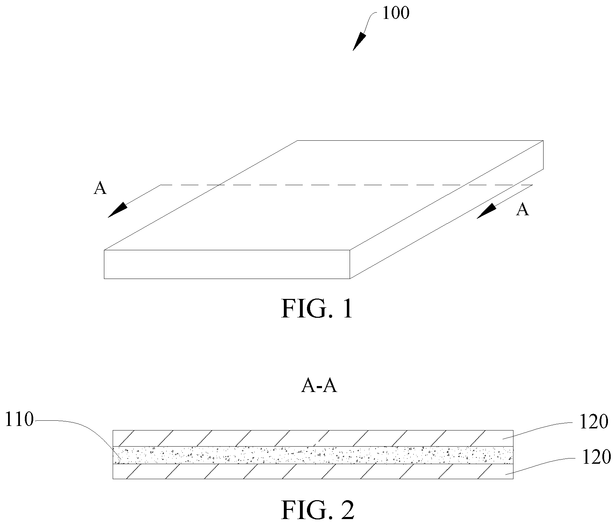

Referring to FIG. 1 and FIG. 2, a negative electrode sheet 100 is provided in the disclosure. The negative electrode sheet 100 includes a negative-electrode current collector 110 and a negative-electrode material layer 120. The negative-electrode material layer 120 is disposed on a surface of the negative-electrode current collector 110 and includes a first active material. The first active material includes a first particle cluster and a second particle cluster. A compaction density of the first particle cluster after being compressed at a pressure of 5 tons is P1, and a compaction density of the second particle cluster after being compressed at a pressure of 5 tons is P2, where P1 and P2 satisfy: 1.0 ≤ P1/P2 ≤ 1.5. When a volume percentage in the first particle cluster reaches 50%, a corresponding particle size value Dv50 (i.e., a median particle size of the first particle cluster) satisfies: 13 µm ≤ Dv50 ≤ 20 µm. When a volume percentage in the second particle cluster reaches 50%, a corresponding particle size value Dv50' (i.e., a median particle size of the second particle cluster) satisfies: 5 µm ≤ Dv50' ≤ 12 µm.

Optionally, the first active material is selected from one or more of artificial graphite, natural graphite, and the like. The natural graphite is selected from one of needle-shaped coke graphite, petroleum coke graphite, and the like. The artificial graphite may be made by processing one or more of needle-shaped coke graphite, petroleum coke graphite, and the like.

Specifically, when the volume percentage in the first particle cluster reaches 50%, the corresponding particle size value Dv50 may be, but is not limited to, 13 µm, 13.5 µm, 13.9 µm, 14 µm, 14.6 µm, 14.9 µm, 15 µm, 15.2 µm, 15.3 µm, 16 µm, 16.5 µm, 16.8 µm, 17.5 µm, 17.9 µm, 18 µm, 18.1 µm, 18.3 µm, 19 µm, 19.3 µm, 19.5 µm, or 20 µm.

Specifically, when the volume percentage in the second particle cluster reaches 50%, the corresponding particle size value Dv50' may be, but is not limited to, 5 µm, 5.2 µm, 6 µm, 6.5 µm, 7 µm, 7.4 µm, 8 µm, 8.5 µm, 8.9 µm, 9 µm, 9.4 µm, 9.9 µm, 10 µm, 10.2 µm, 10.5 µm, 11 µm, 11.2 µm, 11.4 µm, 11.8 µm, 11.9 µm, or 12 µm.

It may be understood that, the case that the corresponding particle size value Dv50 satisfies: 13 µm ≤ Dv50 ≤ 20 µm when the volume percentage in the first particle cluster reaches 50% may refer to that in the first particle cluster, a median of particle sizes ranges from 13 µm to 20 µm, and also refer to that in the first particle cluster, a ratio of a sum of volumes of particles each having a particle size greater than 13 µm and less than 20 µm to the total volume of the first particle cluster is 50%, and a ratio of a sum of volumes of particles each having a particle size less than 13 µm to the total volume of the first particle cluster is 50%.

It may be understood that, the case that the corresponding particle size value Dv50' satisfies: 5 µm ≤ Dv50' ≤ 12 µm when the volume percentage in the second particle cluster reaches 50% may refer to that in the second particle cluster, a median of particle sizes of the particles ranges from 5 µm to 12 µm, and also refer to that in the second particle cluster, a ratio of a sum of volumes of particles each having a particle size greater than 5 µm and less than 12 µm to the total volume of the second particle cluster is 50%, and a ratio of a sum of volumes of particles each having a particle size less than 5 µm to the total volume of the second particle cluster is 50%.

It may be understood that the negative-electrode material layer 120 and the negative-electrode current collector 110 are stacked in sequence. The negative-electrode current collector 110 is configured to carry the negative-electrode material layer 120 and collect a current generated by the first active material in the negative-electrode material layer 120 to generate a relatively high output current.

Optionally, in some embodiments, the negative-electrode material layer 120 is disposed on a surface of the negative-electrode current collector 110. In other embodiments, the negative-electrode material layer 120 is implemented as two negative-electrode material layers 120, where one of the two negative-electrode material layers 120 is disposed on one of two opposite surfaces of the negative-electrode current collector 110, and the other of the two negative-electrode material layers 120 is disposed on the other of the two opposite surfaces of the negative-electrode current collector 110.

It may be understood that, in the case where Dv50 > Dv50', i.e., the corresponding particle size value when the volume percentage in the first particle cluster reaches 50% is greater than the corresponding particle size value when the volume percentage in the second particle cluster reaches 50%, an overall particle size of the first particle cluster is greater than an overall particle size of the second particle cluster.

Optionally, a pressure of an FT-100F powder automatic compaction density meter is set to be 5 tons, and then the FT-100F powder automatic compaction density meter is used to compact the first particle cluster and the second particle cluster. Through measurement it is determined that the compaction density of the first particle cluster at the pressure of 5 tons is P1 and the compaction density of the second particle cluster at the pressure of 5 tons is P2.

In the embodiment, the negative-electrode material layer 120 includes the first active material, the first active material includes the first particle cluster and the second particle cluster, and the corresponding particle size value when the volume percentage in the first particle cluster reaches 50% is greater than the corresponding particle size value when the volume percentage in the second particle cluster reaches 50%, and thus at the same pressure, the compaction density of the first particle cluster is greater than the compaction density of the second particle cluster. In embodiments of the disclosure, the compaction density of the first particle cluster at the pressure of 5 tons is P1, the compaction density of the second particle cluster at the pressure of 5 tons is P2, and P1 and P2 satisfy: 1.0 ≤ P1/P2 ≤ 1.5. In the embodiments of the disclosure, the compaction density of the first particle cluster and the compaction density of the second particle cluster are both in a reasonable range, and thus a degree of graphitization of the first particle cluster and a degree of graphitization of the second particle cluster can be both in a reasonable range during manufacturing of the negative electrode sheet 100, so that in the case where the negative electrode sheet 100 is applied in a battery cell 200, the battery cell 200 may have a relatively high energy density and a relatively good cycling performance. In the case where P1/P2>1.5, on the one hand, it may be that the compaction density P1 of the first particle cluster is too high. In this case, particle sizes of particles in the first particle cluster are too large, so that a degree of graphitization of the particles in the first particle cluster is relatively high during manufacturing of the negative electrode sheet 100, which results in a reduction in lattice defects of the negative electrode sheet 100. Therefore, in the case where the negative electrode sheet 100 is applied in the battery cell 200, when active ions move to be embedded into the negative electrode sheet 100 and dis-embedded from the negative electrode sheet 100, the active ions need to move a relatively long distance to be embedded into the negative electrode sheet 100 or dis-embedded from the negative electrode sheet 100, resulting in polarization of the battery cell 200 during cycling of the battery cell 200. Polarization of the battery cell 200 causes consumption of excessive active ions, and thus the cycling performance of the battery cell 200 is reduced in the case where the negative electrode sheet 100 is applied in the battery cell 200. On the other hand, in the case where P1/P2>1.5, it may be that the compaction density P2 of the second particle cluster is too low. In this case, particle sizes of particles in the second particle cluster are too small, so that during manufacturing of the negative electrode sheet 100, the degree of graphitization of the second particle cluster is relatively low due to too many grain boundaries of the second particle cluster, and thus in the case where the negative electrode sheet 100 is applied in the battery cell 200, the first-time charge and discharge efficiency and the energy density of the battery cell 200 are reduced. In the case where P1/P2<1.0, i.e., the compaction density P1 of the first particle cluster at the pressure of 5 tons is less than the compaction density P2 of the second particle cluster at the pressure of 5 tons, it may be proved that, during manufacturing of the negative electrode sheet 100, the first particle cluster may contain large particles formed by doping of many first binders, where particle sizes of original particles are relatively small. During graphitization of the first particle cluster, the first binders are transformed into soft carbon structures, so that the negative electrode sheet 100 has many defects, and accordingly side reactions between the negative electrode sheet 100 and the electrolyte 210 are increased, which in turn causes a reduction in the first-time charge and discharge performance of the battery cell 200. Furthermore, the negative electrode sheet 100 has many defects, and thus many active ions may be consumed, which in turn causes a reduction in the cycling performance of the battery cell 200.

For the terms used in the disclosure, the first-time charge and discharge efficiency of the battery cell 200 is a ratio of a first-time discharge capacity of the battery cell 200 to a first-time charge capacity of the battery cell 200 after the battery cell 200 is charged for the first time.

In some embodiments, a specific surface area of the first particle cluster before being compressed is S1, a specific surface area of the first particle cluster after being compressed is S2, a specific surface area of the second particle cluster before being compressed is S1', and a specific surface area of the second particle cluster after being compressed is S2', where S1, S2, S1', and S2' satisfy: 1.0 ≤ (S2/S1)/(S2'/S1') ≤ 3.0. Specifically, (S2/S1)/(S2'/S1') may be equal to, but is not limited to, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0.

It may be understood that, S2/S1 represents a ratio of the specific surface area S1 of the first particle cluster before being compressed to the specific surface area S2 of the first particle cluster after being compressed, i.e., S2/S1 represents a reduction ratio of the first particle cluster. In the case where the particles in the first particle cluster are fragmented during compacting the first particle cluster, S2/S1>1.

It may be understood that, S2'/S1' represents a ratio of the specific surface area S1' of the second particle cluster before being compressed to the specific surface area S2' of the second particle cluster after being compressed, i.e., S2'/S1' represents a reduction ratio of the second particle cluster. In the case where the particles in the second particle cluster are fragmented during compacting, S2'/S1'>1.

In the embodiment, the negative electrode sheet 100 satisfies: 1.0 ≤ (S2/S1)/(S2'/S1') ≤ 3.0, which means that during manufacturing of the negative electrode sheet 100, the particles in the first particle cluster are less fragmented during compacting the first particle cluster and the particles in the second particle cluster are less fragmented during compacting the second particle cluster, and thus it can be ensured that the battery cell 200 has a high first-time charge and discharge efficiency, a high energy density, and a relatively good cycling performance in the case where the negative electrode sheet 100 is applied in the battery cell 200. In the case where (S2/S1)/(S2'/S1')>3.0, S2'/S1' is equal to 1 or slightly greater than 1, S2/S1>1, and the specific surface area S2 of the first particle cluster after being compressed is much greater than the specific surface area S1 of the first particle cluster before being compressed, it means that a degree of fragmentation of the first particle cluster during compacting the first particle cluster is relatively high, and thus the first-time charge and discharge efficiency and the energy density of the battery cell 200 are reduced in the case where the negative electrode sheet 100 is applied in the battery cell 200. Furthermore, in the case where many particles in the first particle cluster are fragmented, during cycling of the battery cell 200, the negative electrode sheet 100 consumes many film-forming additives for the electrolyte 210, and thus corrosion of the negative electrode sheet 100 by the film-forming additives for the electrolyte 210 is aggravated, and accordingly the cycling performance of the battery cell 200 is reduced.

In some embodiments, the compaction density P1 of the first particle cluster after being compressed at the pressure of 5 tons satisfies: 1.6 g/cm³ ≤ P1 ≤ 2.0 g/cm³. Specifically, the compaction density P1 of the first particle cluster after being compressed at the pressure of 5 tons may be equal to, but is not limited to, 1.6 g/cm³, 1.63 g/cm³, 1.67 g/cm³, 1.7 g/cm³, 1.72 g/cm³, 1.74 g/cm³, 1.76 g/cm³, 1.78 g/cm³, 1.79 g/cm³, 1.81 g/cm³, 1.83 g/cm³, 1.84 g/cm³, 1.86 g/cm³, 1.88 g/cm³, 1.89 g/cm³, 1.90 g/cm³, 1.91 g/cm³, 1.92 g/cm³, 1.93 g/cm³, 1.94 g/cm³, 1.95 g/cm³, 2.0 g/cm³, etc.

In the embodiment, in the case where the compaction density P1 of the first particle cluster after being compressed at the pressure of 5 tons satisfies: 1.6 g/cm³ ≤ P1 ≤ 2.0 g/cm³, the compaction density P1 of the first particle cluster is in a reasonable range, so that during manufacturing of the negative electrode sheet 100, a degree of graphitization of the first particle cluster can be in a reasonable range, and the number of lattice defects of the negative electrode sheet 100 can be in a reasonable range, and thus in the case where the negative electrode sheet 100 is applied in the battery cell 200, the battery cell 200 may have a relatively high first-time charge and discharge performance, a relatively high energy density, and a relatively good cycling performance. In the case where the compaction density P1 of the first particle cluster after being compressed at the pressure of 5 tons is greater than 2.0 g/cm³, the compaction density of the first particle cluster is too high. In this case, particle sizes of particles in the first particle cluster are too large, so that a degree of graphitization of the particles in the first particle cluster is relatively high during manufacturing of the negative electrode sheet 100, which results in a reduction in lattice defects of the negative electrode sheet 100. Therefore, in the case where the negative electrode sheet 100 is applied in the battery cell 200, when active ions move to be embedded into the negative electrode sheet 100 and or dis-embedded from the negative electrode sheet 100, the active ions need to move a relatively long distance to be embedded into the negative electrode sheet 100 or dis-embedded from the negative electrode sheet 100, resulting in polarization of the battery cell 200 during cycling of the battery cell 200. Polarization of the battery cell 200 causes consumption of excessive active ions, and thus the cycling performance of the battery cell 200 is reduced in the case where the negative electrode sheet 100 is applied in the battery cell 200. In the case where the compaction density P1 of the first particle cluster after being compressed at the pressure of 5 tons is less than 1.6 g/cm³, the compaction density of the first particle cluster is too low, which may prove that, during manufacturing of the negative electrode sheet 100, the first particle cluster may contain large particles formed by doping of many first binders, where particle sizes of original particles are relatively small. During graphitization of the first particle cluster, the first binders may be transformed into soft carbon structures, so that the negative electrode sheet 100 has many defects, and accordingly side reactions between the negative electrode sheet 100 and the electrolyte 210 are increased, which in turn causes a reduction in the first-time charge and discharge performance of the battery cell 200. Furthermore, the negative electrode sheet 100 has many defects, and thus many active ions may be consumed, which in turn causes a reduction in the cycling performance of the battery cell 200.

In some embodiments, the compaction density P2 of the second particle cluster after being compressed at the pressure of 5 tons satisfies: 1.25 g/cm³ ≤ P2 ≤ 1.7 g/cm³. Specifically, the compaction density P2 of the second particle cluster at the pressure of 5 tons may be equal to, but is not limited to, 1.25 g/cm³, 1.28 g/cm³, 1.33 g/cm³, 1.37 g/cm³, 1.4 g/cm³, 1.42 g/cm³, 1.43 g/cm³, 1.45 g/cm³, 1.46 g/cm³, 1.48 g/cm³, 1.49 g/cm³, 1.50 g/cm³, 1.52 g/cm³, 1.54 g/cm³, 1.56 g/cm³, 1.58 g/cm³, 1.59 g/cm³, 1.6 g/cm³, 1.61 g/cm³ 1.63 g/cm³, 1.64 g/cm³, 1.66 g/cm³, 1.68 g/cm³, 1.7 g/cm³, etc.

In the embodiment, in the case where the compaction density P2 of the second particle cluster after being compressed at the pressure of 5 tons satisfies: 1.25 g/cm³ ≤ P2 ≤ 1.7 g/cm³, the compaction density of the second particle cluster after being compressed at the pressure of 5 tons is in a reasonable range, In this case, particle sizes of the particles in the second particle cluster are in a reasonable range, so that a degree of graphitization of the second particle cluster can be also in a reasonable range, and thus in the case where the negative electrode sheet 100 is applied in the battery cell 200, the battery cell 200 may have a relatively high energy density, a relatively high first-time charge and discharge efficiency, and a relatively high cycling performance. In the case where the compaction density P2 of the second particle cluster after being compressed at the pressure of 5 tons is greater than 1.7 g/cm³, the compaction density of the second particle cluster after being compressed at the pressure of 5 tons is too high. In this case, the particle sizes of the particles in the second particle cluster are too large, which is not conducive for filling the particles in the second particle cluster in gaps in the first particle cluster, and thus the energy density of the battery cell 200 is reduced in the case where the negative electrode sheet 100 is applied in the battery cell 200. In the case where the compaction density P2 of the second particle cluster after being compressed at the pressure of 5 tons is less than 1.25 g/cm³, the compaction density of the second particle cluster after being compressed at the pressure of 5 tons is too low. In this case, the particle sizes of the particles in the second particle cluster are too small, so that during manufacturing of the negative electrode sheet 100, the degree of graphitization of the second particle cluster is relatively low due to too many grain boundaries of the second particle cluster, and thus in the case where the negative electrode sheet 100 is applied in the battery cell 200, the first-time charge and discharge efficiency and the energy density of the battery cell 200 are reduced.

In some embodiments, the first particle cluster satisfies: 0.5 ≤ (Dv90-Dv10)/Dv50 ≤ 1.3, where Dv90 represents a corresponding particle size value when the volume percentage in the first particle cluster reaches 90%, Dv10 represents a corresponding particle size value when the volume percentage in the first particle cluster reaches 10%, and Dv50 represents a corresponding particle size value when the volume percentage in the first particle cluster reaches 50%. Specifically, (Dv90-Dv10)/Dv50 may be equal to, but is not limited to, 0.5, 0.55, 0.6, 0.65, 0.7, 0.75, 0.8, 0.85, 0.9, 0.95, 1.0, 1.05, 1.1, 1.15, 1.2, 1.25, 1.3, etc.

The case that Dv90 represents a corresponding particle size value when the volume percentage in the first particle cluster reaches 90% may be understood as that in the first particle cluster, a ratio of a sum of volumes of particles each having a particle size smaller than Dv90 to the total volume of the first particle cluster is 90%.

The case that Dv50 represents a corresponding particle size value when the volume percentage in the first particle cluster reaches 50% may be understood as that in the first particle cluster, a ratio of a sum of volumes of particles each having a particle size smaller than Dv50 to the total volume of the first particle cluster is 50%.

In the embodiment, (Dv90-Dv10)/Dv50 may indicate a degree of particle size distribution of the first particle cluster. In the case where the first particle cluster satisfies: 0.5 ≤ (Dv90-Dv10)/Dv50 ≤ 1.3, particle size distribution of the first particle cluster is in a reasonable range, so that large particles and small particles in the first particle cluster can cooperate with each other to make full use of gaps in the negative electrode sheet 100, thereby improving the energy density of the battery cell 200 in the case where the negative electrode sheet 100 is applied in the battery cell 200. Furthermore, in the case where the first particle cluster satisfies: 0.5 ≤ (Dv90-Dv10)/Dv50 ≤ 1.3, particles in the first particle cluster are neither too large nor too small, so that in the case where the negative electrode sheet 100 is applied in the battery cell 200, the battery cell 200 may have a relatively high first-time charge and discharge efficiency, a relatively high energy density, and a relatively good cycling performance. In the case where (Dv90-Dv10)/Dv50>1.3, the first particle cluster has relatively wide particle size distribution, i.e., there are oversized particles or undersized particles in the first particle cluster. In this case, on the one hand, during manufacturing of the negative electrode sheet 100, the oversized particles are prone to fragmentation during compacting the first particle cluster, so that the battery cell 200 has a reduced first-time charge and discharge efficiency and a reduced energy density in the case where the negative electrode sheet 100 is applied in the battery cell 200. Meanwhile, fragmentation of the oversized particles may cause that the negative electrode sheet 100 consumes many film-forming additives for the electrolyte 210, and thus corrosion of the negative electrode sheet 100 by the film-forming additives for the electrolyte 210 is aggravated, and accordingly the cycling performance of the battery cell 200 is reduced. On the other hand, the undersized particles have many grain boundaries, so that during manufacturing of the negative electrode sheet 100, a degree of graphitization of the first particle cluster is relatively low, which in turn causes a reduction in the first-time charge and discharge efficiency and the energy density of the battery cell 200 in the case where the negative electrode sheet 100 is applied in the battery cell 200. In the case where (Dv90-Dv10)/Dv50< 0.5, particle size distribution of the first particle cluster is relatively narrow, and particle sizes of particles in the first particle cluster are similar, so that it is impossible to make full use of the gaps in the negative electrode sheet 100 through mutual cooperation between large particles and small particles of the first particle cluster, and thus the energy density of the battery cell 200 may be reduced in the case where the negative electrode sheet 100 is applied in the battery cell 200.

In some embodiments, the second particle cluster satisfies: 0.8 ≤ (Dv90'-Dv10')/Dv50' ≤ 1.6, where Dv90' represents a corresponding particle size value when the volume percentage in the second particle cluster reaches 90%, Dv10' represents a corresponding particle size value when the volume percentage in the second particle cluster reaches 10%, and Dv50' represents a corresponding particle size value when the volume percentage in the second particle cluster reaches 50%. Specifically, (Dv90'-Dv10')/Dv50' may be equal to, but is not limited to, 0.8, 0.85, 0.9, 0.95, 1.0, 1.05, 1.1, 1.15, 1.2, 1.25, 1.3, 1.35, 1.4, 1.45, 1.5, 1.55, 1.6, etc.

The case that Dv90' represents a corresponding particle size value when the volume percentage in the second particle cluster reaches 90% may be understood as that in the second particle cluster, a ratio of a sum of volumes of particles each having a particle size smaller than Dv90' to the total volume of the second particle cluster is 90%.

The case that Dv10 represents a corresponding particle size value when the volume percentage in the second particle cluster reaches 10% may be understood as that in the second particle cluster, a ratio of a sum of volumes of particles each having a particle size smaller than Dv10 to the total volume of the second particle cluster is 10%.

In the embodiment, (Dv90'-Dv10')/Dv50' may indicate a degree of particle size distribution of the second particle cluster. In the case where the second particle cluster satisfies: 0.8 ≤ (Dv90'-Dv10')/Dv50' ≤ 1.6, particle size distribution of the second particle cluster is in a reasonable range, and thus the gaps formed by stacking of the first particle cluster can be sufficiently filled with particles in the second particle cluster, thereby increasing the energy density of the battery cell 200 in the case where the negative electrode sheet 100 is applied in the battery cell 200. In the case where (Dv90'-Dv10')/Dv50' >1.6, the second particle cluster has relatively wide particle size distribution, i.e., there are oversized particles or undersized particles in the second particle cluster. In this case, on the one hand, during manufacturing of the negative electrode sheet 100, the gaps formed by stacking of the first particle cluster cannot be filled by the oversized particles in the second particle cluster, so that the energy density of the battery cell 200 is reduced in the case where the negative electrode sheet 100 is applied in the battery cell 200. On the other hand, the undersized particles have many grain boundaries, so that a degree of graphitization of the second particle cluster is relatively low during manufacturing of the negative electrode sheet 100, and thus the first-time charge and discharge efficiency and the energy density of the battery cell 200 are reduced in the case where the negative electrode sheet 100 is applied in the battery cell 200. In the case where (Dv90'-Dv10')/Dv50' <0.8, particle size distribution of the second particle cluster is relatively narrow, and particle sizes of particles in the second particle cluster are similar, so that it is impossible to make full use of the gaps formed by stacking of the first particle cluster, and thus the energy density of the battery cell 200 is reduced in the case where the negative electrode sheet 100 is applied in the battery cell 200.

In some embodiments, the specific surface area of the first particle cluster before being compressed is S1, and the specific surface area of the first particle cluster after being compressed is S2, where S1 and S2 satisfy: 1.0 ≤ S2/S1 ≤ 5.4. Specifically, S2/S1 may be equal to, but is not limited to, 1.0, 1.1, 1.2, 1.3, 1.4, 1.5, 1.6, 1.7, 1.8, 2.0, 2.1, 2.2, 2.3, 2.4, 2.5, 2.6, 2.7, 2.8, 2.9, 3.0, 3.2, 3.4, 3.6, 3.7, 3.9, 4.1, 4.3, 4.5, 4.7, 4.9, 5.0, 5.2, 5.3, 5.4, etc.

In embodiments of the disclosure, S2/S1 represents a ratio of the specific surface area S1 of the first particle cluster before being compressed to the specific surface area S2 of the first particle cluster after being compressed. In the case where the first particle cluster satisfies: 1.0 ≤ S2/S1 ≤ 5.4, the degree of fragmentation of the first particle cluster is in a reasonable range, that is, few particles or almost no particles in the first particle cluster are fragmented, and thus in the case where the negative electrode sheet 100 is applied in the battery cell 200, the negative electrode sheet 100 is prevented from consuming many film-forming additives for the electrolyte 210, and thus aggravation of corrosion of the negative electrode sheet 100 by the film-forming additives for the electrolyte 210 can be avoided, and accordingly the cycling performance of the battery cell 200 can be ensured. In the case where S2/S1>5.4, the degree of fragmentation of the first particle cluster during compacting the first particle cluster is relatively high, and thus the first-time charge and discharge efficiency and the energy density of the battery cell 200 are reduced in the case where the negative electrode sheet 100 is applied in the battery cell 200. Furthermore, in the case where many particles in the first particle cluster are fragmented, during cycling of the battery cell 200, the negative electrode sheet 100 consumes many film-forming additives for the electrolyte 210, and thus corrosion of the negative electrode sheet 100 by the film-forming additives for the electrolyte 210 is aggravated, and accordingly the cycling performance of the battery cell 200 is reduced.

In some embodiments, the specific surface area of the second particle cluster before being compressed is S1', and the specific surface area of the second particle cluster after being compressed is S2', where S1' and S2' satisfy: 1.0 ≤ S2'/S1' ≤ 1.8. Specifically, S2'/S1' may be equal to, but is not limited to, 1.0, 1.05, 1.1, 1.15, 1.2, 1.25, 1.3, 1.35, 1.4, 1.45, 1.5, 1.55, 1.6, 1.65, 1.7, 1.75, or 1.8.

In embodiments of the disclosure, S2'/S1' represents a ratio of the specific surface area S1' of the second particle cluster before being compressed to the specific surface area S2' of the second particle cluster after being compressed. In the case where the second particle cluster satisfies: 1.0 ≤ S2'/S1' ≤ 1.8, the degree of fragmentation of the second particle cluster is in a reasonable range, that is, almost no particles in the second particle cluster are fragmented, so that in the case where the negative electrode sheet 100 is applied in the battery cell 200, the negative electrode sheet 100 can be prevented from consuming many film-forming additives for the electrolyte 210, and thus corrosion of the negative electrode sheet 100 by the film-forming additives for the electrolyte 210 can be prevented from being aggravated, and accordingly the cycling performance of the battery cell 200 can be ensured. In the case where S2'/S1' >1.8, the degree of fragmentation of the second particle cluster during compacting the second particle cluster is relatively high, and thus the first-time charge and discharge efficiency and the energy density of the battery cell 200 are reduced in the case where the negative electrode sheet 100 is applied in the battery cell 200. Furthermore, in the case where many particles in the second particle cluster are fragmented, during cycling of the battery cell 200, the negative electrode sheet 100 consumes many film-forming additives for the electrolyte 210, and thus corrosion of the negative electrode sheet 100 by the film-forming additives for the electrolyte 210 is aggravated, and accordingly the cycling performance of the battery cell 200 is reduced.

In some embodiments, the negative electrode sheet 100 may further include a first binder, a first conductive agent, and a thickener.

In the embodiment, the first binder is used for bonding and maintaining the negative-electrode material layer 120 to enhance electronic contact between the negative-electrode material layer 120 and the negative-electrode current collector 110 and better stabilize the structure of the negative electrode sheet 100. By means of the first conductive agent, a contact resistance of the negative electrode sheet 100 is reduced, and movement of electrons is accelerated, and thus the negative electrode sheet 100 has a good charge and discharge performance, and accordingly the charge and discharge efficiency of the battery cell 200 is increased in the case where the negative electrode sheet 100 is applied in the battery cell 200. The thickener may be used for improving uniformity of components of the negative electrode sheet 100 and bonding the first active material, the first conductive agent, and the negative-electrode current collector 110, which is conducive to maintaining the integrity of the structure of the negative electrode sheet 100.

Optionally, the first binder includes one or more of an asphalt binder, styrene butadiene rubber (SBR), polyvinylidene fluoride (PVDF), polytetrafluoroethylene (PTFE), polyvinyl alcohol (PVA), polyacrylonitrile (PAN), polyacrylic acid (PAA), polyacrylate, carboxymethyl battery cellulose (CMC), sodium alginate, and the like.

Optionally, the first conductive agent includes one or more of acetylene black, conductive carbon black, a carbon nanotube, a carbon fiber, graphene, and the like.

Optionally, the thickener includes one or more of SBR, CMC, and the like.

Optionally, in some embodiments, the first particle cluster and the second particle cluster are obtained by sieving a raw active material, and a corresponding particle size value Dv50" when a volume percentage in the raw active material reaches 50% satisfies: 10 µm ≤ Dv50" ≤ 15 µm. Specifically, Dv50" may be equal to, but is not limited to, 10 µm, 10.3 µm, 10.8 µm, 11 µm, 11.3 µm, 11.8 µm, 12 µm, 12.4 µm, 12.8 µm, 13 µm, 13.5 µm, 13.9 µm, 14 µm, 14.2 µm, 14.5 µm, 14.8 µm, or 15 µm.

The case that the corresponding particle size value when the volume percentage in the raw active material reaches 50% is Dv50" may be understood as that in the raw active material, a ratio of a sum of volumes of particles each having a particle size smaller than Dv50" to the total volume of the raw active material is 50%.

In embodiments of the disclosure, the first particle cluster and the second particle cluster are obtained by sieving the raw active material, where the raw active material satisfies: 10 µm ≤ Dv50" ≤ 15 µm. In this case, a particle size of the raw active material is in a reasonable range, and thus it is conducive to obtaining the first particle cluster and the second particle cluster through sieving the raw active material, so that the battery cell 200 may have a relatively high energy density and a relatively good cycling performance in the case where the negative electrode sheet 100 is applied in the battery cell 200. In the case where Dv50">15 µm, the particle size of the raw active material is relatively large, and accordingly Dv50" of the second particle cluster obtained through sieving the raw active material is relatively great, i.e., the particle size of the second particle cluster is relatively large, so that the gaps formed by stacking of the first particle cluster cannot be sufficiently filled with the particles in the second particle cluster, and thus the energy density of the battery cell 100 is reduced in the case where the negative electrode sheet 100 is applied in the battery cell 200. In the case where Dv50"<10 µm, the particle size of the raw active material is relatively small, and accordingly Dv50 of the first particle cluster obtained through sieving the raw active material and Dv50' of the second particle cluster obtained through sieving the raw active material are both relatively small. On the one hand, in the case where Dv50 of the first particle cluster is relatively small, it is not conducive to increasing the compaction density of the first particle cluster at the pressure of 5 tons, and thus the energy density of the battery cell 200 is reduced in the case where the negative electrode sheet 100 is applied in the battery cell 200. On the other hand, in the case where Dv50' of the second particle cluster is relatively small, the second particle cluster obtained through sieving the raw active material has a relatively small particle size and has many grain boundaries, and the degree of graphitization of the second particle cluster is relatively low due to too many grain boundaries, so that in the case where the negative electrode sheet 100 is applied in the battery cell 200, the first-time charge and discharge efficiency and the energy density of the battery cell 200 are reduced.

Optionally, in some embodiments, the raw active material satisfies: 1.3 ≤ (Dv90"-Dv10")/Dv50" ≤ 1.8, where Dv90" represents a corresponding particle size value when a volume percentage in the raw active material reaches 90%, Dv10" represents a corresponding particle size value when the volume percentage in the raw active material reaches 10%, and Dv50" represents a corresponding particle size value when the volume percentage in the raw active material reaches 50%.

The case that Dv90" represents a corresponding particle size value when the volume percentage in the raw active material reaches 90% may be understood as that in the raw active material, a ratio of a sum of volumes of particles each having a particle size smaller than Dv90" to the total volume of the raw active material is 90%.

The case that Dv10" represents a corresponding particle size value when the volume percentage in the raw active material reaches 10% may be understood as that in the raw active material, a ratio of a sum of volumes of particles each having a particle size smaller than Dv10" to the total volume of the raw active material is 10%.

In the embodiment, (Dv90''-Dv10'')/Dv50" may indicate a degree of particle size distribution of the raw active material. In the case where the raw active material satisfies: 1.3 ≤ (Dv90"-Dv10")/Dv50" ≤ 1.8, particle size distribution of the raw active material is in a reasonable range, which is favorable for sieving the raw active material to obtain the first particle cluster and the second particle cluster. In the case where (Dv90"-Dv10")/Dv50">1.8, the raw active material has relatively wide particle size distribution, i.e., there are oversized particles or undersized particles in the raw active material. By sieving the raw active material, it can make the oversized particles be in the first particle cluster and the undersized particles be in the second particle cluster. The oversized particles may be prone to fragmentation during compacting, so that the first-time charge and discharge efficiency and the energy density of the battery cell 200 may be reduced in the case where the negative electrode sheet 100 is applied in the battery cell 200. The undersized particles have many grain boundaries, so that a degree of graphitization of the second particle cluster is relatively low during manufacturing of the negative electrode sheet 100, and thus the first-time charge and discharge efficiency and the energy density of the battery cell 200 may be reduced in the case where the negative electrode sheet 100 is applied in the battery cell 200. In the case where (Dv90"-Dv10'')/Dv50" < 1.3, particle size distribution of the raw active material is relatively narrow, so that it is difficult to sieve the raw active material to obtain the first particle cluster and the second particle cluster.

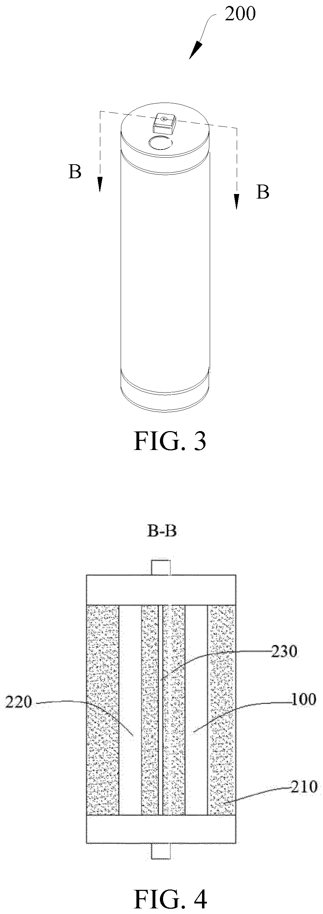

Referring to FIG. 3 and FIG. 4, a battery cell 200 is further provided in embodiments of the disclosure. The battery cell 200 includes an electrolyte 210, a positive electrode sheet 220, a separator 230, and a negative electrode sheet 100 provided in the disclosure. The positive electrode sheet 220 is at least partially immersed in the electrolyte 210. The separator 230 is located at one side of the positive electrode sheet 220 and at least partially immersed in the electrolyte 210. The negative electrode sheet 100 is disposed at one side of the separator 230 away from the positive electrode sheet 220 and at least partially immersed in the electrolyte 210.

In the embodiment, the positive electrode sheet 220, the separator 230, and the negative electrode sheet 100 are sequentially stacked or the positive electrode sheet 220, the separator 230, and the negative electrode sheet 100 as a whole are wound, and the positive electrode sheet 220, the separator 230, and the negative electrode sheet 100 are all at least partially immersed in the electrolyte 210. The battery cell 200 includes the negative electrode sheet 100 in embodiments of the disclosure, and by means of debugging of the overall structure of the negative-electrode material layer 120, the comprehensive performance of the negative electrode sheet 100 may be improved, so that the battery cell 200 including the negative electrode sheet 100 may have a relatively high energy density and a relatively good cycling performance.

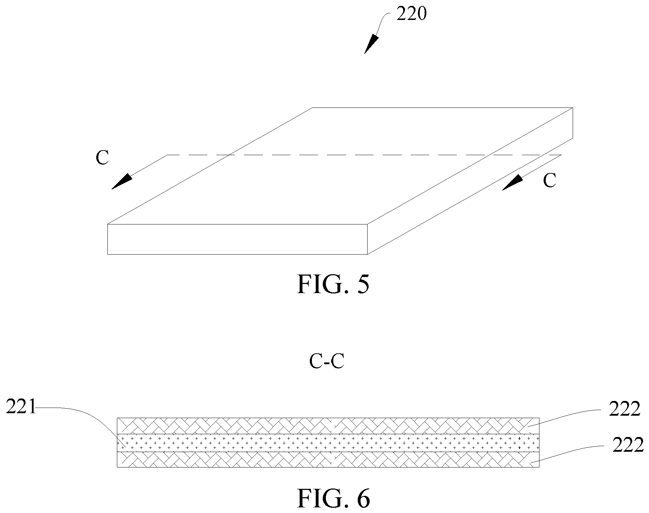

Optionally, referring to FIG. 5 and FIG. 6, in some embodiments, the positive electrode sheet 220 includes a positive-electrode current collector 221 and a positive-electrode material layer 222. The positive-electrode material layer 222 is disposed on a surface of the positive-electrode current collector 221. The positive electrode material includes a second active material, a second binder, and a second conductive agent.

In the embodiment, the second active material is used for storing or releasing active ions. The second binder is used for bonding and maintaining the positive-electrode material layer 222 to enhance electronic contact between the positive-electrode material layer 222 and the positive-electrode current collector 221 and to better stabilize the structure of the positive electrode sheet 220. By means of the second conductive agent, a contact resistance of the positive electrode sheet 220 may be reduced, and movement of electrons may be accelerated, so that the positive electrode sheet 220 may have a good charge and discharge performance, and accordingly the charge and discharge efficiency of the battery cell 200 may be increased in the case where the positive electrode sheet 220 is applied in the battery cell 200.

Optionally, the second active material includes one or more of a transition metal oxide, a polyanionic compound, an organic polymer, and a prussian blue material.

Optionally, the second binder includes one or more of PVDF, PTFE, PAN, PAA, and the like.

Optionally, the second conductive agent includes one or more of acetylene black, conductive carbon black, a carbon nanotube, a carbon fiber, graphene, and the like.

Optionally, the electrolyte 210 includes an electrolyte salt (such as lithium hexafluorophosphate (LiPF₆), sodium hexafluorophosphate, etc.) and an organic solvent, where specific types and compositions of the electrolyte salt and the organic solvent are conventional in the field of the battery cell 200, and can be selected according to actual needs.

Optionally, the separator 230 includes any separator used in the field of current battery cells, and the separator 230 includes one or more of a polypropylene (PP) separator, a polyethylene (PE) separator, and a ceramic separator. A thickness d of the separator 230 satisfies: 5 µm ≤ d ≤ 25 µm. Specifically, the thickness d of the separator 230 may be equal to, but is not limited to, 5 µm, 5.5 µm, 6 µm, 6.3 µm, 7 µm, 8 µm, 8.5 µm, 9 µm, 10 µm, 12 µm, 13 µm, 14 µm, 16 µm, 17 µm, 18 µm, 19 µm, 20 µm, 21 µm, 22 µm, 23 µm, 24 µm, or 25 µm.

Optionally, the battery cell 200 may be, but is not limited to, a lithium ion battery cell 200, a sodium ion battery cell 200, a magnesium ion battery cell 200, etc. The battery cell 200 may be, but is not limited to, a prismatic battery cell 200, a circular battery cell 200, a pouch battery cell 200, etc.

The technical solutions of the disclosure are further described below in a number of embodiments.

Embodiment 1 to embodiment 18 and comparative embodiment 1 to comparative embodiment 4 are as follows.
1. Manufacturing of the positive electrode sheet 220: the second active material (e.g., lithium iron phosphate (LiFePO₄)), the second conductive agent (e.g., conductive carbon black), and the second binder (e.g., PVDF) are mixed according to a mass ratio of 97:0.9:2.1, and an appropriate amount of N-methyl pyrrolidone (NMP) is added to the mixed powder and stirred uniformly to obtain a positive electrode slurry. The positive electrode slurry is uniformly coated on two opposite side surfaces of the positive-electrode current collector 221, and the positive-electrode current collector 221 coated with the positive electrode slurry is transferred to an oven for drying and then is subject to rolling and slitting to obtain the positive electrode sheet 220. Each of two opposite side surfaces of the positive electrode sheet 220 has a surface density of 32.85 mg/cm² and a compaction density of 2.43 g/cm³.
2. Manufacturing of the negative electrode sheet 100 is as follows.
   (1) Manufacturing of artificial graphite: one or two of needle-shaped coke graphite and petroleum coke graphite is used as a raw material, and the raw material is pulverized into a powder having a particle size ranging from 6 µm to 12 µm (e.g., 6 µm, 8 µm, 10 µm, 12 µm, etc.). A portion of the raw material is assigned as raw material A, the first binder (e.g., an asphalt binder) is added to raw material A, a mass of the added first binder accounts for 0 % to 15 % (e.g., 3 %, 5 %, 8 %, 12 %, 15 %, etc., excluding 0 %) of a mass of raw material A, the first binder is mixed with raw material A and then placed in a reactor to be heated up to a temperature ranging from 500 °C to 800 °C (e.g., 500 °C, 600 °C, 700 °C, 800 °C, etc.), and then finished product A is obtained through graphitization at a high temperature ranging from 2500 °C to 3500 °C (e.g., 2500 °C, 2800 °C, 3000 °C, 3200 °C, 3500 °C, etc.). A portion of the raw material is assigned as raw material B, and raw material B is directly subject to graphitization at a high temperature ranging from 2500 °C to 3500 °C to obtain finished product B. An average particle size of finished product A is larger than that of finished product B. Finished product A is mixed with finished product B according to a ratio ranging from 2:8 to 8:2 (e.g., 2:8, 3:7, 4:6, 5:5, 6:4, 7:3, 8:2, etc.) to obtain the first active material. Types of raw active materials used in manufacturing of battery cells 200 in embodiment 1 to embodiment 18 and comparative embodiment 1 to comparative embodiment 4, are illustrated in Table 1.
   (2) Manufacturing of the negative electrode sheet 100: the first active material, the first conductive agent (e.g., conductive carbon black), the first binder (e.g., carboxymethylcellulose sodium (CMC)), and the thickener (e.g., SBR) are mixed according to a mass ratio of 96.5:0.9:1.3:1.3, and deionized water is added and stirred to obtain a negative electrode slurry. The negative electrode slurry is uniformly coated on two opposite side surfaces of the negative-electrode current collector 110 to form a negative-electrode material layer 120, and the negative-electrode current collector 110 coated with the negative electrode slurry is transferred to an oven for drying and then is subject to rolling and slitting to obtain the negative electrode sheet 100. Each of the two opposite side surfaces of the negative electrode sheet 100 has a surface density of 15.71 mg/cm² and a compaction density of 1.56 g/cm³.
3. Manufacturing of the electrolyte 210: ethylene carbonate (EC), ethyl methyl carbonate (EMC), and diethyl carbonate (DEC) are mixed according to a volume ratio of 1:1:1 to obtain a mixed solvent, and dry lithium salt (e.g., LiPF₆) is added to the mixed solvent to form the electrolyte 210 with a concentration of 1 mol/L.
4. Manufacturing of the separator 230: a PP separator 230 having a thickness of 16 µm is selected.
5. Manufacturing of the battery cell 200: the positive electrode sheet 220, the separator 230, and the negative electrode sheet 100 manufactured as described above are stacked in sequence, so that the separator 230 is located between the positive electrode sheet 220 and the negative electrode sheet 100. The positive electrode sheet 220, the separator 230, and the negative electrode sheet 100 as a whole are wound to obtain a jelly roll. The jelly roll is placed in an outer package. After drying, the electrolyte 210 described above is injected. After standing, forming, packaging, and other processes, the battery cell 200 is obtained.

The battery cells 200 in embodiment 1 to embodiment 18 and comparative embodiment 1 to comparative embodiment 4 are manufactured according to the above method.

Performance test is as follows.

Before measurement of a compaction density, a specific surface area, and particle size distribution of the first active material, it is necessary to obtain the first particle cluster and the second particle cluster by sieving the raw active material as follows.

Use a 1000 mesh sieve, load the obtained raw active material into the sieve, add a sieve bottom and a sieve cover, tap a sieve frame while sieving, strike 125 to 150 times per minute, rotate the sieve 1/8 of a turn for every 25 strikes, and sieve for 10 minutes. After 10 minutes, change to use another receiving material sump, and sieve for 5 minutes more. Weigh a material in the receiving material sump, and if the weight of the material in the receiving material sump in each minute is less than 0.1 % of a weight of feedstock, it means that sieving is performed well. A particle cluster on the sieve is assigned as the first particle cluster, and a particle cluster on the receiving material sump is assigned as the second particle cluster.
1. Measurement of the compaction density of the first active material: a compaction density of the FT-100F powder automatic compaction density meter is set to 5 tons to measure a compaction density P1 of the first particle cluster at the pressure of 5 tons and a compaction density P2 of the second particle cluster at the pressure of 5 tons for each of the battery cells 200 in embodiment 1 to embodiment 18 and comparative embodiment 1 to comparative embodiment 4. P1, P2, and P1/P2 for each of the battery cells 200 in embodiment 1 to embodiment 18 are illustrated in Table 1.
2. Measurement of a specific surface area of the first active material: The specific surface area S1 of the first particle cluster before being compressed, the specific surface area S2 of the first particle cluster after being compressed, the specific surface area S1' of the second particle cluster before being compressed, and the specific surface area S2 of the second particle cluster after being compressed in each embodiment and each comparative embodiment are measured with a Mack 2020-HD88 specific surface area analyzer. S1/S2, S1'/S2', and (S2/S1)/(S2'/S1') for each of the battery cells 200 in embodiment 1 to embodiment 18 and comparative embodiment 1 to comparative embodiment 4 are illustrated in Table 1.
3. Measurement of particle size distribution of the first active material: Dv50" of the raw active material, Dv90 of the first particle cluster, Dv10 of the first particle cluster, and Dv50 of the first particle cluster in each embodiment and each comparative embodiment are measured with a laser diffraction particle size distribution measuring instrument (e.g., Malvern Mastersizer 3000) according to a particle size distribution laser diffraction method, e.g., GB/T19077-2016, and particle size distribution of the first particle cluster is obtained based on calculation for (Dv90-Dv10)/Dv50. Dv90' of the second particle cluster, Dv10' of the second particle cluster, and Dv50' of the second particle cluster in each embodiment are measured with the laser diffraction particle size distribution measuring instrument (e.g., Malvern Mastersizer 3000) according to the particle size distribution laser diffraction method, e.g., GB/T19077-2016, and particle size distribution of the second particle cluster is obtained based on calculation for (Dv90'-Dv10')/Dv50'. Dv50" of the raw active material, (Dv90-Dv10)/Dv50, and (Dv90'-Dv10')/ Dv50' for each of the battery cells 200 in embodiment 1 to embodiment 18 and comparative embodiment 1 to comparative embodiment 4 are illustrated in Table 1.

Performance parameters of the negative electrode sheets 100 in embodiment 1 to embodiment 18 and comparative embodiment 1 to comparative embodiment 4 obtained in the above performance tests are illustrated in Table 1.

**Table 1: Table 1 illustrates performance parameters of the negative electrode sheet 100 in each of the battery cells 200 in embodiment 1 to embodiment 18 and comparative embodiment 1 to comparative embodiment 4.**

| Embodiment and comparative embodiment | Type of raw active material | Dv50" of raw active material | P1/ P2 | (S2/ S1) /(S2'/ S1') | P1 | (Dv90- Dv10) /Dv50 | S1/ S2 | P2 | (Dv90'- Dv10')/ Dv50' | S2'/ S1' |
|---|---|---|---|---|---|---|---|---|---|---|
| A1 | C | 10 | 1.0 | 1.0 | 1.70 | 0.63 | 1.00 | 1.70 | 0.92 | 1.00 |
| A2 | C | 11 | 1.1 | 1.4 | 1.78 | 0.80 | 1.50 | 1.62 | 1.14 | 1.07 |
| A3 | C | 12 | 1.2 | 1.8 | 1.85 | 0.96 | 2.00 | 1.54 | 1.32 | 1.11 |
| A4 | C | 13 | 1.3 | 2.2 | 1.91 | 1.09 | 3 | 1.47 | 1.45 | 1.36 |
| A5 | C | 14 | 1.4 | 2.6 | 1.96 | 1.20 | 4 | 1.40 | 1.54 | 1.54 |
| A6 | C | 15 | 1.5 | 3.0 | 2.00 | 1.30 | 5.4 | 1.33 | 1.60 | 1.80 |
| A7 | D | 10 | 1.0 | 1.0 | 1.60 | 0.50 | 1.0 | 1.60 | 0.80 | 1.01 |
| A8 | D | 11 | 1.1 | 1.4 | 1.71 | 0.61 | 1.6 | 1.55 | 0.90 | 1.14 |
| A9 | D | 12 | 1.2 | 1.8 | 1.78 | 0.72 | 2.5 | 1.48 | 1.01 | 1.39 |
| A10 | D | 13 | 1.3 | 2.2 | 1.82 | 0.84 | 3.6 | 1.40 | 1.14 | 1.64 |
| A11 | D | 14 | 1.4 | 2.6 | 1.85 | 0.97 | 4.5 | 1.32 | 1.28 | 1.73 |
| A12 | D | 15 | 1.5 | 3.0 | 1.88 | 1.10 | 5.4 | 1.25 | 1.43 | 1.80 |
| A13 | C+D | 10 | 1.0 | 1.0 | 1.65 | 0.55 | 1.0 | 1.65 | 0.83 | 1.04 |
| A14 | C+D | 11 | 1.1 | 1.4 | 1.74 | 0.69 | 1.5 | 1.58 | 1.03 | 1.07 |
| A15 | C+D | 12 | 1.2 | 1.8 | 1.81 | 0.82 | 2.3 | 1.51 | 1.21 | 1.28 |
| A16 | C+D | 13 | 1.3 | 2.2 | 1.87 | 0.95 | 3.5 | 1.44 | 1.34 | 1.59 |
| A17 | C+D | 14 | 1.4 | 2.6 | 1.92 | 1.08 | 4.4 | 1.37 | 1.44 | 1.69 |
| A18 | C+D | 15 | 1.5 | 3.0 | 1.95 | 1.21 | 5.4 | 1.30 | 1.52 | 1.80 |
| B1 | C+D | 12 | 0.9 | 0.9 | 1.50 | 0.45 | 5.5 | 1.67 | 0.82 | 1.77 |
| B2 | C+D | 12 | 0.8 | 0.7 | 1.44 | 0.38 | 5.6 | 1.80 | 0.62 | 1.75 |
| B3 | C+D | 12 | 1.6 | 3.1 | 2.05 | 1.40 | 1.7 | 1.28 | 1.55 | 1.89 |
| B4 | C+D | 12 | 1.7 | 3.2 | 2.10 | 1.50 | 1.5 | 1.24 | 1.59 | 2.14 |

In Table 1, Ai denotes embodiment i, e.g., A1 denotes embodiment 1 and A3 denotes embodiment 3. In Table 1, Bi denotes comparative embodiment i, e.g., B1 denotes comparative embodiment 1 and B2 denotes comparative embodiment 2. In Table 1, C denotes needle-shaped coke graphite, and D denotes petroleum coke graphite.

4. Performance test of the battery cell 200 is as follows.
(1) Energy density test: the battery cells 200 in embodiment 1 to embodiment 18 and comparative embodiment 1 to comparative embodiment 4 are subject to a charge and discharge test at 25 °C as follows. The battery cell 200 is charged at a constant power of 0.5 P until a voltage of the battery cell 200 increases to 3.65 V, and then the battery cell 200 is stood for 30 minutes. The battery cell 200 is discharged at a constant power of 0.5 P until the voltage of the battery cell 200 decreases to 2.5 V, and then the battery cell 200 is stood for 30 minutes. The battery cell 200 in each embodiment and each comparative embodiment is subject to four charge and discharge cycles, an average value of discharge energy of the last three times is assigned as E0, and the energy density of the battery cell 200 is calculated according to a formula U=E0/(L×W×T), where *L* represents a length of the battery cell 200, *W* represents a width of the battery cell 200, and *T* represents a thickness of the battery cell 200. The energy density U of each of the battery cells 200 in embodiment 1 to embodiment 18 and comparative embodiment 1 to comparative embodiment 4 are illustrated in Table 2.
(2) Cycling performance test: the battery cells 200 in embodiment 1 to embodiment 18 and comparative embodiment 1 to comparative embodiment 4 are subject to a charge and discharge test at 25 °C as follows. The battery cell 200 is charged at a constant power of 0.5 P until a voltage of the battery cell 200 increases to 3.65 V, and then the battery cell 200 is stood for 30 minutes. The battery cell 200 is discharged at a constant power of 0.5 P until the voltage of the battery cell 200 decreases to 2.5 V, and then the battery cell 200 is stood for 30 minutes. The battery cell 200 in each embodiment and each comparative embodiment is subject to a fullcharge and full-discharge cycle test until a capacity of the battery cell 200 is less than 70% of an initial discharge capacity of the battery cell 200, and then the number of cycles of the battery cell 200 when the capacity of the battery cell 200 is less than 70% of the initial discharge capacity of the battery cell 200 is recorded.

The energy density of each of the battery cells 200 and the number of cycles when the capacity of the battery cell 200 is less than 70% of the initial discharge capacity of the battery cell 200 in each of embodiment 1 to embodiment 18 and comparative embodiment 1 to comparative embodiment 4, obtained through the above performance tests, are illustrated in Table 2.

**Table 2: performance parameters of each of the battery cells 200 in embodiment 1 to embodiment 18 and comparative embodiment 1 to comparative embodiment 4 are illustrated in Table 2.**

| Embodiment and comparative embodiment | Energy density U of the battery cell 200 (Wh/L) | The number of cycles when the capacity of the battery cell 200 is less than 70% of the initial discharge capacity of the battery cell 200 (cycle) |
|---|---|---|
| Embodiment 1 | 358 | 9500 |
| Embodiment 2 | 360 | 9300 |
| Embodiment 3 | 362 | 9100 |
| Embodiment 4 | 363 | 8900 |
| Embodiment 5 | 364 | 8650 |
| Embodiment 6 | 365 | 8300 |
| Embodiment 7 | 339 | 12000 |
| Embodiment 8 | 341 | 11600 |
| Embodiment 9 | 343 | 11300 |
| Embodiment 10 | 344 | 11000 |
| Embodiment 11 | 345 | 10800 |
| Embodiment 12 | 346 | 10600 |
| Embodiment 13 | 350 | 10500 |
| Embodiment 14 | 351 | 10200 |
| Embodiment 15 | 352 | 10000 |
| Embodiment 16 | 353 | 9800 |
| Embodiment 17 | 354 | 9700 |
| Embodiment 18 | 355 | 9600 |
| Comparative embodiment 1 | 320 | 7000 |
| Comparative embodiment 2 | 300 | 5400 |
| Comparative embodiment 3 | 300 | 7500 |
| Comparative embodiment 4 | 280 | 4900 |

In Table 1 and Table 2, a raw material used for each of the negative electrode sheets in embodiment 1 to embodiment 6 is needle-shaped coke graphite, a raw material used for each of the negative electrode sheets in embodiment 7 to embodiment 12 is petroleum coke graphite, and a raw material used for each of the negative electrode sheets in embodiment 13 to embodiment 18 is a mixture of needle-shaped coke graphite and petroleum coke graphite. As can be seen from the performance parameters of the negative electrode sheets 100 and the performance parameters of the battery cells 200 in embodiment 1 to embodiment 6, in the case where Dv50" of the raw active material gradually increases, P1/P2, P1, S2/S1, S2'/S1', (S2/S1)/(S2'/S1'), (Dv90-Dv10)/Dv50, (Dv90'-Dv10')/Dv50', and the energy density U all gradually increase, but P2 and the number of cycles when the capacity of the battery cell 200 is less than 70% of the initial discharge capacity of the battery cell 200 gradually decrease. The reason is as follows. As Dv50" of the raw active material gradually increases, the particle size of the first particle cluster obtained through sieving the raw active material gradually increases, and thus a degree of crystallization of the first particle cluster at a high temperature ranging from 2500 °C to 3500 °C increases, so that the degree of graphitization of the first particle cluster increases, which is conducive to improving the first-time charge and discharge efficiency and the energy density U of the battery cell 200. Furthermore, since the particle size is positively correlated with the compaction density, the compaction density P1 of the first particle cluster at a pressure of 5 tons gradually increases, and accordingly P1/P2 also increases, which is conducive to improving the energy density of the battery cell 200 in the case where the negative electrode sheet 100 is applied in the battery cell 200, and thus the energy density U of the battery cell 200 also gradually increases, but the degree of crystallization of the first particle cluster is increased, so that the negative electrode sheet 100 may have less lattice defects, and a path for the active ions to move to be embedded into the negative electrode sheet 100 or dis-embedded from the negative electrode sheet 100 is relatively long, resulting in polarization of the battery cell 200 during cycling of the battery cell 200. Polarization of the battery cell 200 causes consumption of excessive active ions, and thus the cycling performance of the battery cell 200 is reduced. Furthermore, in the case where the particles in the first particle cluster is relatively large, during manufacturing of the negative electrode sheet 100, the particles having relatively large particle sizes in the first particle cluster are prone to fragmentation, S2/S1 and (S2/S1)/(S2'/S1') for the negative electrode sheet 100 gradually increase, and the fragmented particles may cause consumption of more active ions during cycling of the battery cell 200, so that the number of cycles when the capacity of the battery cell 200 is less than 70% of the initial discharge capacity of the battery cell 200 is reduced, and ultimately the cycling performance of the battery cell 200 is reduced. Moreover, the particles having relatively large particle sizes in the first particle cluster are prone to fragmentation during manufacturing of the negative electrode sheet 100, resulting in that during cycling of the battery cell 200, the negative electrode sheet 100 consumes many film-forming additives for the electrolyte 210, and thus corrosion of the negative electrode sheet 100 by the film-forming additives for the electrolyte 210 is aggravated, and accordingly the number of cycles when the capacity of the battery cell 200 is less than 70% of the initial discharge capacity of the battery cell 200 is reduced, and ultimately the cycling performance of the battery cell 200 is reduced. In addition, in the case where (Dv90-Dv10)/Dv50 for the first particle cluster gradually increases, it is proved that particle size distribution of the first particle cluster is relatively wide. In the case where (Dv90'-Dv10')/Dv50' for the second particle cluster gradually increases, it is proved that particle size distribution of the second particle cluster is relatively wide, and S2'/S1' for the second particle cluster gradually increases in a certain range, i.e., some particles in the second particle cluster are formed by bonding of the first binder and then fragmented during compacting the second particle cluster, and the gaps formed by stacking of the first particle cluster can be filled by the particles in the second particle cluster, thereby improving the energy density of the negative electrode sheet 100, and ultimately increasing the energy density of the battery cell 200. A raw material used in embodiment 7 to embodiment 12 is petroleum coke graphite, and a raw material used in embodiment 13 to embodiment 18 is a mixture of needle-shaped coke graphite and petroleum coke graphite. Although the raw materials used are different, the above rule can be obtained by analyzing the performance parameters of the negative electrode sheets 100 and the performance parameters of the battery cells 200 in embodiment 7 to embodiment 12, and the performance parameters of the negative electrode sheets 100 and the performance parameters of the battery cells 200 in embodiment 13 to embodiment 18.

Furthermore, referring to embodiment 1, embodiment 7, and embodiment 13, a raw material used for the negative electrode sheet in embodiment 1 is needle-shaped coke graphite, a raw material used for the negative electrode sheet in embodiment 7 is petroleum coke graphite, a raw material used for the negative electrode sheet in embodiment 13 is a mixture of needle-shaped coke graphite and petroleum coke graphite, and Dv50 of the raw active material in embodiment 1, Dv50 of the raw active material in embodiment 7, and Dv50 of the raw active material in embodiment 13 are equal. In the case where particle sizes in embodiment 1 and embodiment 7 are equal, the energy density of the battery cell 200 in embodiment 1 is higher than the energy density of the battery cell 200 in embodiment 7, but the number of cycles when the capacity of the battery cell 200 in embodiment 1 is less than 70% of the initial discharge capacity of the battery cell 200 in embodiment 1 is less than the number of cycles when the capacity of the battery cell 200 in embodiment 7 is less than 70% of the initial discharge capacity of the battery cell 200 in embodiment 7. The reason is as follows. The needle-shaped coke graphite has relatively high anisotropy, so that the negative electrode sheet 100 in embodiment 1 has a relatively high structural stability, and in the case where the particle size in embodiment 1 is equal to the particle size in embodiment 7, the first particle cluster of the negative electrode sheet 100 made of needle-shaped coke graphite has a relatively high compaction density at a pressure of 5 tons, and accordingly the negative electrode sheet 100 has a relatively high energy density. Therefore, the energy density of the battery cell 200 in embodiment 1 is higher than the energy density of the battery cell 200 in embodiment 7. Furthermore, the negative electrode sheet 100 made of needle-shaped coke graphite has a relatively high degree of graphitization during manufacturing, so that the negative electrode sheet 100 may have few defects, and thus a path for the active ions to move to be embedded into the negative electrode sheet 100 or dis-embedded from the negative electrode sheet 100 is relatively long, resulting in polarization of the battery cell 200 during cycling of the battery cell 200. Polarization of the battery cell 200 causes consumption of excessive active ions, and thus the cycling performance of the battery cell 200 is reduced, and accordingly the number of cycles when the capacity of the battery cell 200 in embodiment 1 is less than 70% of the initial discharge capacity of the battery cell 200 in embodiment 1 is less than the number of cycles when the capacity of the battery cell 200 in embodiment 7 is less than 70% of the initial discharge capacity of the battery cell 200 in embodiment 7. Needle-shaped coke graphite and petroleum coke graphite are used as raw materials to balance advantages and disadvantages of the needle-shaped coke graphite, so that the battery cell 200 in embodiment 13 may have a relatively high energy density and a relatively good cycling performance. Furthermore, the above rule can be obtained by analyzing the data in embodiment 2, embodiment 8, and embodiment 14, the data in embodiment 3, embodiment 9, and embodiment 15, the data in embodiment 4, embodiment 10, and embodiment 16, the data in embodiment 5, embodiment 11, and embodiment 17, and the data in embodiment 6, embodiment 12, and embodiment 18.

Furthermore, referring to the data in comparative embodiments 1 to comparative embodiment 4 in Table 1 and Table 2, it can be seen that P1/P2 in comparative embodiment 1 and P1/P2 in comparative embodiment 2 are both less than 1.0, (S2/S1)/(S2'/S1') in comparative embodiment 1 and (S2/S1)/(S2'/S1') in comparative embodiment 2 are both less than 1.0, the battery cell 200 in comparative embodiment 1 and the battery cell 200 in comparative embodiment 2 both have a relatively low energy density, and the number of cycles when the capacity of the battery cell 200 is less than 70% of the initial discharge capacity of the battery cell 200 is relatively small in comparative embodiment 1 and comparative embodiment 2. The reason is as follows. In the case where P1/P2<1.0 and (S2/S1)/(S2'/S1') <1.0, it may be proved that during manufacturing of the negative electrode sheet 100, the first particle cluster may contain large particles formed by doping of many first binders, where particle sizes of original particles are relatively small, so that the energy density of the battery cell 200 is relatively low in the case where the negative electrode sheet 100 is applied in the battery cell 200. In addition, during graphitization of the first particle cluster, the first binders may be transformed into soft carbon structures, so that the negative electrode sheet 100 has many defects, and accordingly side reactions between the negative electrode sheet 100 and the electrolyte 210 are increased, so that the first-time charge and discharge performance of the battery cell 200 is reduced. Furthermore, the negative electrode sheet 100 has many defects, and thus many active ions are consumed, which in turn causes a reduction in the cycling performance of the battery cell 200. Therefore, the battery cell 200 in embodiment 1 and the battery cell 200 in embodiment 2 both have a relatively low energy density and a relatively poor cycling performance. In comparative embodiment 3 and comparative embodiment 4, P1/P2>1.5 and (S2/S1)/(S2'/S1') >3.0, which means that the battery cell 200 in comparative embodiment 3 and the battery cell 200 in comparative embodiment 4 both have a relatively low energy density, and the number of cycles when the capacity of the battery cell 200 is less than 70% of the initial discharge capacity of the battery cell 200 is relatively less in the comparative embodiment 3 and comparative embodiment 4. The reason is as follows. In the case where P1/P2>1.5 and (S2/S1)/(S2'/S1') >3.0, on the one hand, it may be that the compaction density P1 of the first particle cluster is too high. In this case, particle sizes of particles in the first particle cluster are too large, so that the degree of graphitization of the particles in the first particle cluster is relatively high during manufacturing of the negative electrode sheet 100, which results in a reduction in lattice defects of the negative electrode sheet 100. Therefore, in the case where the negative electrode sheet 100 is applied in the battery cell 200, when active ions move to be embedded into the negative electrode sheet 100 or dis-embedded from the negative electrode sheet 100, the active ions need to move a relatively long distance, resulting in polarization of the battery cell 200 during cycling of the battery cell 200. Polarization of the battery cell 200 causes consumption of excessive active ions, and thus the cycling performance of the battery cell 200 is reduced in the case where the negative electrode sheet 100 is applied in the battery cell 200. On the other hand, in the case where P1/P2>1.5 and (S2/S1)/(S2'/S1') >3.0, it may be that the compaction density P2 of the second particle cluster is too low. In this case, the particle sizes of the particles in the second particle cluster are too small, so that during manufacturing of the negative electrode sheet 100, the degree of graphitization of the second particle cluster is relatively low due to too many grain boundaries of the second particle cluster, and thus in the case where the negative electrode sheet 100 is applied in the battery cell 200, the first-time charge and discharge efficiency and the energy density of the battery cell 200 are reduced. On another hand, in the case where the particle sizes of the particles in the first particle cluster are relatively large, during compacting the first particle cluster, the degree of fragmentation of the first particle cluster is relatively high, so that during cycling of the battery cell 200, the negative electrode sheet 100 consumes many film-forming additives for the electrolyte 210, and thus corrosion of the negative electrode sheet 100 by the film-forming additives for the electrolyte 210 is aggravated, and accordingly the cycling performance of the battery cell 200 is reduced. Therefore, the battery cell 200 in comparative embodiment 3 and the battery cell 200 in comparative embodiment 4 both have a relatively low energy density and a relatively poor cycling performance.

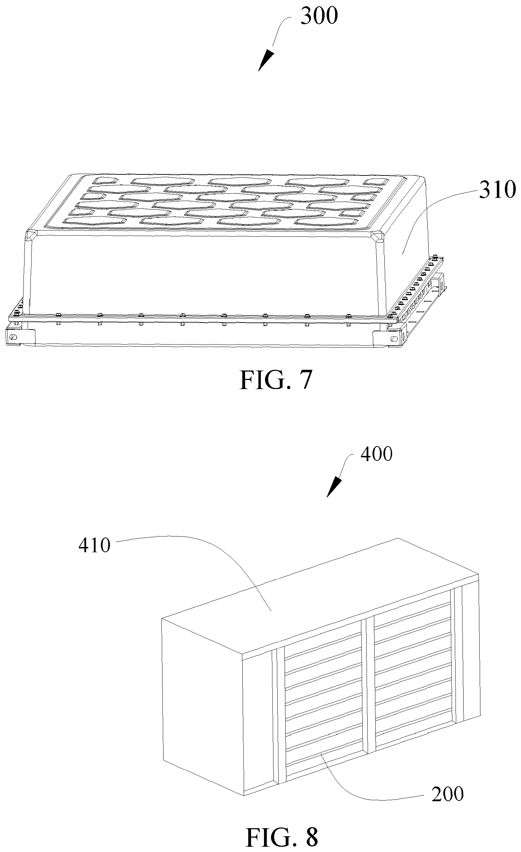

Referring to FIG. 7, a battery pack 300 is further provided in embodiments of the disclosure. The battery pack 300 includes a box 310 and the battery cell 200 provided in the disclosure. Multiple battery cells 200 are received in the box 310 and connected in series and/or in parallel.

In the embodiment, the multiple battery cells 200 are connected in series, in parallel, or in series-parallel connection. The battery pack 300 includes the multiple battery cells 200, and the battery cell 200 has a relatively high energy density and a relatively good cycling performance, so that the battery pack 300 has a relatively high energy density and a relatively good cycling performance, and thus the battery pack 300 has a relatively long service life.

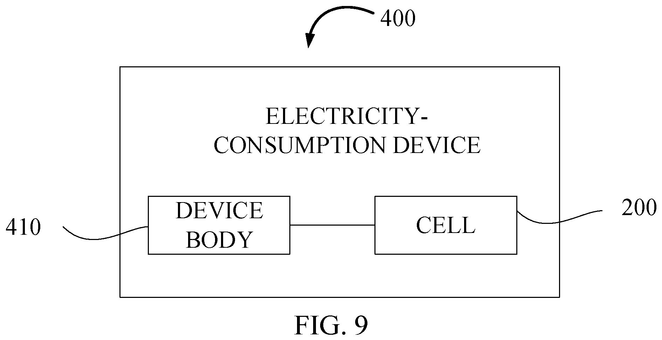

Referring to FIG. 8 and FIG. 9, an electricity-consumption device 400 is further provided in embodiments of the disclosure. The electricity-consumption device 400 includes a device body 410 and the battery cell 200 provided in the disclosure, where the battery cell 200 is configured to power the device body 410.

In the embodiment, the battery cell 200 is configured to power the device body 410. The battery cell 200 has a relatively high energy density and a relatively good cycling performance and thus can provide stable and safe electrical energy to the device body 410.

The electricity-consumption device 400 in the disclosure may be, but is not limited to, a mobile phone, a tablet computer, a notebook computer, a desktop computer, an intelligent bracelet, an intelligent watch, an electronic reader, etc. The electricity-consumption device 400 in the embodiment in FIG. 8 of the disclosure is an energy-storage battery cabinet.

The term "embodiment" or "implementation" referred to herein means that a particular feature, structure, or feature described in conjunction with the embodiment or implementation may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

Finally, it may be noted that the foregoing embodiments are merely intended to illustrate but not limit the technical solutions of the disclosure. Although the disclosure is described in detail with reference to the foregoing preferred embodiments, those of ordinary skill in the art may understand that modifications or equivalent replacements can be made to the technical solutions of the disclosure within the scope of the appended claims.

## Claims

1. A negative electrode sheet (100), comprising:
a negative-electrode current collector (110); and
a negative-electrode material layer (120), wherein the negative-electrode material layer (120) is disposed on a surface of the negative-electrode current collector (110) and comprises a first active material, wherein the first active material comprises a first particle cluster and a second particle cluster, wherein a compaction density of the first particle cluster after being compressed at a pressure of 5 tons is P1, and wherein a compaction density of the second particle cluster after being compressed at the pressure of 5 tons is P2, wherein P1 and P2 satisfy 1.0 ≤ P1/P2 ≤ 1.5,
wherein:
when a volume percentage in the first particle cluster reaches 50%, a corresponding particle size value Dv50 satisfies 13 µm ≤ Dv50 ≤ 20 µm;
when a volume percentage in the second particle cluster reaches 50%, a corresponding particle size value Dv50' satisfies 5 µm ≤ Dv50' ≤ 12 µm; and
a specific surface area of the first particle cluster before being compressed is S1, a specific surface area of the first particle cluster after being compressed is S2, a specific surface area of the second particle cluster before being compressed is S1', and a specific surface area of the second particle cluster after being compressed is S2', wherein S1, S2, S1', and S2' satisfy 1.0 ≤ (S2/S1)/(S2'/S1') ≤ 3.0, wherein S1, S2, S1' and S2' are measured according to the description.

2. The negative electrode sheet of claim 1, wherein the compaction density P1 of the first particle cluster after being compressed at the pressure of 5 tons satisfies 1.6 g/cm³ ≤ P1 ≤ 2.0 g/cm³.

3. The negative electrode sheet of any one of claims 1 to 2, wherein the compaction density P2 of the second particle cluster after being compressed at the pressure of 5 tons satisfies 1.25 g/cm³ ≤ P2 ≤ 1.7 g/cm³.

4. The negative electrode sheet of any one of claims 1 to 3, wherein the first particle cluster satisfies 0.5 ≤ (Dv90-Dv10)/Dv50 ≤ 1.3, wherein Dv90 represents a corresponding particle size value when the volume percentage in the first particle cluster reaches 90%, Dv10 represents a corresponding particle size value when the volume percentage in the first particle cluster reaches 10%

5. The negative electrode sheet of any one of claims 1 to 4, wherein the second particle cluster satisfies 0.8 ≤ (Dv90'-Dv10')/Dv50' ≤ 1.6, wherein Dv90' represents a corresponding particle size value when the volume percentage in the second particle cluster reaches 90%, Dv10' represents a corresponding particle size value when the volume percentage in the second particle cluster reaches 10%.

6. The negative electrode sheet of any one of claims 1 to 5, wherein S1 and S2 satisfy 1.0 ≤ S2/S1 ≤ 5.4.

7. The negative electrode sheet of any one of claims 1 to 6, wherein S1' and S2' satisfy: 1.0 ≤ S2'/S1' ≤ 1.8.

8. A battery cell (200), comprising:
an electrolyte (210);
a positive electrode sheet (100) at least partially immersed in the electrolyte (210);
a separator (230) located at one side of the positive electrode sheet (100) and at least partially immersed in the electrolyte (210); and
the negative electrode sheet (100) of any one of claims 1 to 7, wherein the negative electrode sheet (100) is disposed at one side of the separator (230) away from the positive electrode sheet (100) and at least partially immersed in the electrolyte (210).

9. A battery pack (300), comprising:
a box (310); and
a plurality of battery cells (200) of claim 8, the plurality of battery cells (200) being received in the box (310) and electrically connected in series and/or in parallel.

10. An electricity-consumption device (400), comprising:
a device body (410); and
the battery cell (200) of claim 8, wherein the battery cell (200) is configured to power the device body (410).

## Patentansprüche

1. Negativelektrodenblatt (100), umfassend:
einen Negativelektrodenstromabnehmer (110); und
eine Negativelektrodenmaterialschicht (120), wobei die Negativelektrodenmaterialschicht (120) auf einer Oberfläche des Negativelektrodenstromabnehmers (110) angeordnet ist und ein erstes aktives Material umfasst, wobei das erste aktive Material einen ersten Partikelcluster und einen zweiten Partikelcluster umfasst, wobei eine Verdichtungsdichte des ersten Partikelclusters nach dem Verdichten mit einem Druck von 5 Tonnen P1 beträgt, und wobei eine Verdichtungsdichte des zweiten Partikelclusters nach dem Verdichten mit dem Druck von 5 Tonnen P2 beträgt, wobei P1 und P2 1,0 ≤ P1/P2 ≤ 1,5 erfüllen,
wobei:
wenn ein Volumenprozentsatz in dem ersten Partikelcluster 50 % erreicht, ein entsprechender Partikelgrößenwert Dv50 13 µm ≤ Dv50 ≤ 20 µm erfüllt;
wenn ein Volumenprozentsatz in dem zweiten Partikelcluster 50 % erreicht, ein entsprechender Partikelgrößenwert Dv50' 5 µm ≤ Dv50' ≤ 12 µm erfüllt; und
eine spezifische Oberfläche des ersten Partikelclusters vor dem Verdichten S1 ist, eine spezifische Oberfläche des ersten Partikelclusters nach dem Verdichten S2 ist, eine spezifische Oberfläche des zweiten Partikelclusters vor dem Verdichten S1' ist, und eine spezifische Oberfläche des zweiten Partikelclusters nach dem Verdichten S2' ist, wobei S1, S2, S1' und S2' 1,0 ≤ (S2/S1)/(S2'/S1') ≤ 3,0 erfüllen, wobei S1, S2, S1' und S2' gemäß der Beschreibung gemessen werden.

2. Negativelektrodenblatt nach Anspruch 1, wobei die Verdichtungsdichte P1 des ersten Partikelclusters nach dem Verdichten mit dem Druck von 5 Tonnen 1,6 g/cm³ ≤ P1 ≤ 2,0 g/cm³ erfüllt.

3. Negativelektrodenblatt nach einem der Ansprüche 1 bis 2, wobei die Verdichtungsdichte P2 des zweiten Partikelclusters nach dem Verdichten mit dem Druck von 5 Tonnen 1,25 g/cm³ ≤ P2 ≤ 1,7 g/cm³ erfüllt.

4. Negativelektrodenblatt nach einem der Ansprüche 1 bis 3, wobei der erste Partikelcluster 0,5 ≤ (Dv90-Dv10)/Dv50 ≤ 1,3 erfüllt, wobei Dv90 einen entsprechenden Partikelgrößenwert darstellt, wenn der Volumenprozentsatz in dem ersten Partikelcluster 90 % erreicht, Dv10 einen entsprechenden Partikelgrößenwert darstellt, wenn der Volumenprozentsatz in dem ersten Partikelcluster 10 % erreicht

5. Negativelektrodenblatt nach einem der Ansprüche 1 bis 4, wobei der zweite Partikelcluster 0,8 ≤ (Dv90'-Dv10')/Dv50' ≤ 1,6 erfüllt, wobei Dv90' einen entsprechenden Partikelgrößenwert darstellt, wenn der Volumenprozentsatz in dem zweiten Partikelcluster 90 % erreicht, Dv10' einen entsprechenden Partikelgrößenwert darstellt, wenn der Volumenprozentsatz in dem zweiten Partikelcluster 10 % erreicht.

6. Negativelektrodenblatt nach einem der Ansprüche 1 bis 5, wobei S1 und S2 1,0 ≤ S2/S1 ≤ 5,4 erfüllen.

7. Negativelektrodenblatt nach einem der Ansprüche 1 bis 6, wobei S1' und S2' Folgendes erfüllen: 1,0 ≤ S2'/S1' ≤ 1,8.

8. Batteriezelle (200), umfassend:
ein Elektrolyt (210);
ein Positivelektrodenblatt (100), das mindestens teilweise in den Elektrolyten (210) eingetaucht ist;
einen Separator (230), der sich an einer Seite des Positivelektrodenblatts (100) befindet und mindestens teilweise in den Elektrolyten (210) eingetaucht ist; und
das Negativelektrodenblatt (100) nach einem der Ansprüche 1 bis 7, wobei das Negativelektrodenblatt (100) an einer Seite des Separators (230) weg von dem Positivelektrodenblatt (100) angeordnet und mindestens teilweise in den Elektrolyten (210) eingetaucht ist.

9. Batteriepack (300), umfassend:
ein Gehäuse (310); und
eine Vielzahl von Batteriezellen (200) nach Anspruch 8, wobei die Vielzahl von Batteriezellen (200) in dem Gehäuse (310) aufgenommen und elektrisch in Reihe und/oder parallel geschaltet sind.

10. Stromverbrauchsvorrichtung (400), umfassend:
einen Vorrichtungskörper (410); und
die Batteriezelle (200) nach Anspruch 8, wobei die Batteriezelle (200) so konfiguriert ist, dass sie den Vorrichtungskörper (410) mit Strom versorgt.

## Revendications

1. Feuille d'électrode négative (100), comportant :
un collecteur de courant d'électrode négative (110) ; et
une couche de matériau d'électrode négative (120), dans laquelle la couche de matériau d'électrode négative (120) est disposée sur une surface du collecteur de courant d'électrode négative (110) et comporte un premier matériau actif, dans laquelle le premier matériau actif comporte un premier agrégat de particules et un deuxième agrégat de particules, dans laquelle une densité de compactage du premier agrégat de particules après avoir été comprimé à une pression de 5 tonnes est P1, et dans laquelle une densité de compactage du deuxième agrégat de particules après avoir été comprimé à la pression de 5 tonnes est P2, dans laquelle P1 et P2 satisfont 1,0 ≤ P1/P2 ≤ 1,5,
dans laquelle :
lorsqu'un pourcentage en volume dans le premier agrégat de particules atteint 50 %, une valeur de taille de particule Dv50 correspondante satisfait 13 µm ≤ Dv50 ≤ 20 µm ;
lorsqu'un pourcentage en volume dans le deuxième agrégat de particules atteint 50 %, une valeur de taille de particule Dv50' correspondante satisfait 5 µm ≤ Dv50' ≤ 12 µm ; et
une surface spécifique du premier agrégat de particules avant d'être comprimé est S1, une surface spécifique du premier agrégat de particules après avoir été comprimé est S2, une surface spécifique du deuxième agrégat de particules avant d'être comprimé est S1', et une surface spécifique du deuxième agrégat de particules après avoir été comprimé est S2', dans laquelle S1, S2, S1' et S2' satisfont 1,0 ≤ (S2/S1)/(S2'/S1') ≤ 3,0, dans laquelle S1, S2, S1' et S2' sont mesurés selon la description.

2. Feuille d'électrode négative selon la revendication 1, dans laquelle la densité de compactage P1 du premier agrégat de particules après avoir été comprimé à la pression de 5 tonnes satisfait 1,6 g/cm³ ≤ P1 ≤ 2,0 g/cm³.

3. Feuille d'électrode négative selon l'une quelconque des revendications 1 à 2, dans laquelle la densité de compactage P2 du deuxième agrégat de particules après avoir été comprimé à la pression de 5 tonnes satisfait 1,25 g/cm³ ≤ P2 ≤ 1,7 g/cm³.

4. Feuille d'électrode négative selon l'une quelconque des revendications 1 à 3, dans laquelle le premier agrégat de particules satisfait 0,5 ≤ (Dv90-Dv10)/Dv50 ≤ 1,3, dans laquelle Dv90 représente une valeur de taille de particule correspondante lorsque le pourcentage en volume dans le premier agrégat de particules atteint 90 %, Dv10 représente une valeur de taille de particule correspondante lorsque le pourcentage en volume dans le premier agrégat de particules atteint 10 %

5. Feuille d'électrode négative selon l'une quelconque des revendications 1 à 4, dans laquelle le deuxième agrégat de particules satisfait 0,8 ≤ (Dv90'-Dv10')/Dv50' ≤ 1,6, dans laquelle Dv90' représente une valeur de taille de particule correspondante lorsque le pourcentage en volume dans le deuxième agrégat de particules atteint 90 %, Dv10' représente une valeur de taille de particule correspondante lorsque le pourcentage en volume dans le deuxième agrégat de particules atteint 10 %.

6. Feuille d'électrode négative selon l'une quelconque des revendications 1 à 5, dans laquelle S1 et S2 satisfont 1,0 ≤ S2/S1 ≤ 5,4.

7. Feuille d'électrode négative selon l'une quelconque des revendications 1 à 6, dans laquelle S1' et S2' satisfont : 1,0 ≤ S2'/S1' ≤ 1,8.

8. Élément de batterie (200), comportant :
un électrolyte (210) ;
une feuille d'électrode positive (100) au moins partiellement immergée dans l'électrolyte (210) ;
un séparateur (230) situé au niveau d'un côté de la feuille d'électrode positive (100) et au moins partiellement immergé dans l'électrolyte (210) ; et
la feuille d'électrode négative (100) selon l'une quelconque des revendications 1 à 7, dans lequel la feuille d'électrode négative (100) est disposée au niveau d'un côté du séparateur (230) à l'écart de la feuille d'électrode positive (100) et au moins partiellement immergée dans l'électrolyte (210).

9. Bloc-batterie (300), comportant :
un boîtier (310) ; et
une pluralité d'éléments de batterie (200) selon la revendication 8, la pluralité d'éléments de batterie (200) étant reçus dans le boîtier (310) et connectés électriquement en série et/ou en parallèle.

10. Dispositif de consommation d'électricité (400), comportant :
un corps de dispositif (410) ; et
l'élément de batterie (200) selon la revendication 8, dans lequel l'élément de batterie (200) est configuré pour alimenter le corps de dispositif (410).
